# EUROPÄISCHE PATENTSCHRIFT

(11) **EP 3 052 367 B1**
(45) Veröffentlichungstag und Bekanntmachung des Hinweises auf die Patenterteilung: **15.01.2020**
(21) Anmeldenummer: 14777551.4
(22) Anmeldetag: 25.09.2014
(51) Int. Cl.: B61C 15/10

(54) **SANDUNGSVORRICHTUNG FÜR EIN SCHIENENFAHRZEUG UND VERFAHREN ZUM BEREITSTELLEN VON SAND FÜR EIN SCHIENENFAHRZEUG**
SAND DISPENSER FOR A RAIL VEHICLE AND METHOD FOR PROVIDING SAND FOR A RAIL VEHICLE
DISPOSITIF DE SABLAGE POUR VÉHICULE FERROVIAIRE ET PROCÉDÉ DE DOSAGE DE SABLE POUR VÉHICULE FERROVIAIRE

(30) Priorität: 30.09.2013 DE 102013016167
(43) Veröffentlichungstag der Anmeldung: 10.08.2016
(73) Patentinhaber: KNORR-BREMSE Systeme für Schienenfahrzeuge GmbH, 80809 München (DE)
(72) Erfinder: KRISMANIC, Georg, A-1020 Wien (AT); HOESCH, Florian, A-1030 Wien (AT); SCHNEIDER, Albert, A-1020 Wien (AT)
(86) Internationale Anmeldenummer: PCT/EP2014/070440
(87) Internationale Veröffentlichungsnummer: WO 2015/044244

(56) Entgegenhaltungen:
- EP-A1- 0 016 471
- EP-A1- 1 418 108
- EP-A1- 2 311 653
- WO-A1-2008/061650
- DE-A1- 10 333 637

## Beschreibung

Die vorliegende Erfindung bezieht sich auf eine Sandungsvorrichtung für ein Schienenfahrzeug und ein Verfahren zum Bereitstellen von Sand für ein Schienenfahrzeug.

Sand zum Erhöhen eines Reibungsbeiwerts zwischen Rad und Schiene bei einem Schienenfahrzeug kann durch einen Luftstrom in einem Schlauch oder einem Rohr transportiert werden. Um bei verschiedenen Bedingungen eine vorbestimmte Menge Sand zu transportieren, sind verschiedene Luftmengen erforderlich. Die unterschiedlichen Luftmengen können ein Dosieren der Menge beeinflussen.

Die EP2311653 beschreibt eine Sandaustragungseinrichtung für ein Schienenfahrzeug.

Die Druckschrift EP 1 418 108 A1 zeigt eine druckluftbetriebene Sandstreuvorrichtung, wie sie im Oberbegriff des Anspruchs 1 beschrieben ist, und ein entsprechendes Verfahren.

Es ist die Aufgabe der vorliegenden Erfindung eine verbesserte Sandungsvorrichtung für ein Schienenfahrzeug und ein verbessertes Verfahren zum Bereitstellen von Sand für ein Schienenfahrzeug zu schaffen.

Diese Aufgabe wird durch eine Sandungsvorrichtung für ein Schienenfahrzeug und ein Verfahren zum Bereitstellen von Sand für ein Schienenfahrzeug gemäß den unabhängigen Ansprüchen gelöst.

Ein Dosiervorgang für eine gewünschte Menge Sand kann von einem Fördervorgang zu einem Bestimmungsort des Sands entkoppelt werden. Das Entkoppeln kann eine Wechselwirkung zwischen dem Dosiervorgang durch einen Dosierer und dem Fördervorgang durch einen Förderer verhindern. Wenn der Dosiervorgang und der Fördervorgang druckluftbetrieben sind, kann zum Entkoppeln ein Druckausgleich und alternativ oder ergänzend ein Luftmengenausgleich zwischen dem Dosierer und dem Förderer durchgeführt werden. Dadurch kann ein Überdruck bzw. ein Luftüberschuss oder ein Unterdruck bzw. ein Luftmangel zwischen dem Dosierer und dem Förderer ausgeglichen werden.

Eine Sandungsvorrichtung für ein Schienenfahrzeug umfasst die folgenden Merkmale:
eine Dosiereinrichtung zum pneumatischen Dosieren einer gewünschten Sandmenge unter Verwendung eines Dosierluftstroms;
eine Fördereinrichtung zum pneumatischen Fördern der Sandmenge zu zumindest einer Streustelle unter Verwendung eines Förderluftstroms; und
eine Entkopplungseinrichtung zum pneumatischen Entkoppeln der Dosiereinrichtung und der Fördereinrichtung, wobei die Entkopplungseinrichtung dazu ausgebildet ist, einen Ausgleichsluftstrom zum Ausgleichen eines Unterschieds zwischen einem Ausgangsluftstrom der Dosiereinrichtung und einem Eingangsluftstrom der Fördereinrichtung bereitzustellen.

Ein Verfahren zum Bereitstellen von Sand für ein Schienenfahrzeug umfasst die folgenden Schritte:
Dosieren einer gewünschten Sandmenge unter Verwendung eines Dosierluftstroms und/oder eines Dosierluftdruckes;
Fördern der Sandmenge zu zumindest einer Streustelle unter Verwendung eines Förderluftstroms und/oder eines Förderluftdruckes; und
Entkoppeln eines Ausgangsluftstroms der Dosiereinrichtung und eines Eingangsluftstroms der Fördereinrichtung unter Verwendung eines Ausgleichsluftstroms zum Ausgleichen eines Unterschieds zwischen dem Ausgangsluftstrom und dem Eingangsluftstrom.

Unter einer Sandungsvorrichtung kann ein Gerät zum Bereitstellen von Sand im Bereich zumindest einer Kontaktstelle zwischen einem Rad des Schienenfahrzeugs und der Schiene verstanden werden. Der Bereich der Kontaktstelle kann als Streustelle bezeichnet werden. Ein Dosierluftstrom kann eine notwendige Energie zum Dosieren der Sandmenge bereitstellen. Der Dosierluftstrom kann als komprimierte Luft bereitgestellt werden. Der Dosierluftstrom kann mit einem hohen Druckniveau bereitgestellt werden. Der Dosierluftstrom kann eine mengenmäßig größere Luftmenge und die Sandmenge auf einem niedrigen Druckniveau durch die Dosiereinrichtung reißen. Ein Förderluftstrom kann eine notwendige Energie zum Fördern der Sandmenge zu der Streustelle bereitstellen. Der Förderluftstrom kann als komprimierte Luft bereitgestellt werden. Der Förderluftstrom kann mit einem hohen Druckniveau bereitgestellt werden. Der Förderluftstrom kann eine mengenmäßig größere Luftmenge und die Sandmenge auf einem niedrigen Druckniveau durch die Fördereinrichtung reißen. Ein Ausgangsluftstrom der Dosiereinrichtung kann ein kombinierter Luftstrom aus dem Dosierluftstrom und einer durch die Dosiereinrichtung mitgerissenen Luft sein. Ein Eingangsluftstrom der Fördereinrichtung kann ein durch den Förderluftstrom durch die Fördereinrichtung mitgerissener Luftstrom sein.

Die Entkopplungseinrichtung kann eine Druckausgleichskammer zum Koppeln des Ausgleichsluftstroms aufweisen. Die Druckausgleichskammer kann in einer Verbindungsleitung zwischen der Dosiereinrichtung und der Fördereinrichtung angeordnet sein. Die Druckausgleichskammer kann ein Hohlraum sein, in den die vom Dosierluftstrom mitgerissene Luft und der Sand eingebracht werden. Der kann Sand aufgrund seiner kinetischen Energie näherungsweise geradlinig durch die Druckausgleichskammer transportiert werden, während die Luft den in der Druckausgleichskammer herrschenden Umgebungsdruck annimmt. Der Sand und die Luft aus der Druckausgleichskammer können von der Fördereinrichtung unter Verwendung des Förderluftstroms angesaugt werden.

Die Entkopplungseinrichtung kann einen, zu der Fördereinrichtung hin schräg ausgeführten Boden zum Verhindern von Sandablagerungen in der Entkopplungseinrichtung aufweisen. Durch den schrägen Boden entsteht ein Trichtereffekt, der in Einbaulage die Gravitation zum Transport des Sands zu der Fördereinrichtung nutzt.

Die Entkopplungseinrichtung kann für den Ausgleichsluftstrom zumindest eine Ausgleichsluftstromöffnung zu einer Umgebung aufweisen. Eine Ausgleichsluftstromöffnung kann eine Mündung eines Ausgleichsluftstromkanals sein. Der Ausgleichsluftstromkanal kann den Ausgleichsluftstrom von oder zu der Entkopplungseinrichtung leiten.

Die Dosiereinrichtung und alternativ oder ergänzend die Fördereinrichtung kann einen Ejektor mit zumindest einer Ejektorbohrung zum Bereitstellen des Dosierluftstroms und alternativ oder ergänzend des Förderluftstroms aufweisen. Ein Ejektor kann eine Düse sein, zu deren Achse die Ejektorbohrung schräg angeordnet ist. Die Düse kann eine geringe oder keine Querschnittsverjüngung aufweisen. Dabei definiert die Richtung der Schräge projiziert auf die Düse eine Förderrichtung des Ejektors.

Die Dosiereinrichtung und alternativ oder ergänzend die Fördereinrichtung kann einen Injektor mit zumindest einer Injektordüse zum Bereitstellen des Dosierluftstroms und alternativ oder ergänzend des Förderluftstroms aufweisen. Ein Injektor kann eine Düse mit einer ausgeprägten Querschnittsverjüngung sein. Die Querschnittsverjüngung bildet dabei bis zu der Querschnittsverjüngung eine trichterförmige Fangdüse und anschließend an die Querschnittsverjüngung einen Diffusor aus. An der engsten Stelle der Querschnittsverjüngung befindet sich ein Diffusorhals. Die Injektordüse ist auf die Querschnittsverjüngung ausgerichtet und der Dosierluftstrom oder der Förderluftstrom reißen in der Fangdüse Luft und Sand mit. Der Injektor weist einen hohen Wirkungsgrad auf. Der Injektor ist wenig anfällig für Verschmutzungen.

Die Dosiereinrichtung und alternativ oder ergänzend die Fördereinrichtung kann einen Luftverstärker mit zumindest einem Ringspalt zum Bereitstellen des Dosierluftstroms und alternativ oder ergänzend des Förderluftstroms aufweisen. Ein Luftverstärker kann eine Düse mit einer strömungsoptimierten Querschnittsverjüngung sein. Der Ringspalt ist in Förderrichtung vor der Querschnittsverjüngung angeordnet und ist dazu ausgebildet, eine näherungsweise laminare Strömung an der Wand der Düse entlang bereitzustellen. Die laminare Strömung reißt Luft und Sand durch die Düse. Durch die laminare Strömung wird der Sand nur geringfügig verwirbelt und tritt als gerichteter Strahl aus dem Luftverstärker aus.

Die Dosiereinrichtung und alternativ oder ergänzend die Fördereinrichtung kann eine Venturidüse mit zumindest einem Abnahmerohr zum Zuführen der Sandmenge aufweisen. Die Venturidüse kann in Einbaulage horizontal ausgerichtet sein. Durch eine Venturidüse kann der Sand unter Verwendung des Dosierluftstroms oder des Förderluftstroms seitlich abgelenkt werden. Dadurch kann auf einen Krümmer verzichtet werden.

Die Dosiereinrichtung kann zumindest eine Falschluftstromöffnung zu einer Umgebung aufweisen. Die Falschluftstromöffnung kann benachbart zu einer Einlassöffnung der Dosiereinrichtung angeordnet sein. Die Falschluftstromöffnung kann dazu ausgebildet sein, einen Falschluftstrom zum Fluidisieren von Sand im Bereich der Einlassöffnung bereitzustellen, wenn der Dosierluftstrom durch die Dosiereinrichtung strömt. Ein Falschluftstrom kann die von dem Dosierluftstrom durch die Dosiereinrichtung mitgerissene Luft sein. Die Falschluftstromöffnung kann die Mündung eines Falschluftstromkanals sein.

Durch die Falschluftstromöffnung kann der Falschluftstrom mit geringem Widerstand angesaugt werden. Dann kann der Sandbehälter gedichtet ausgeführt werden.

Die Falschluftstromöffnung kann schräg angeordnet sein. Die Falschluftöffnung kann durch ein poröses Medium verschlossen sein. Das poröse Medium kann ein Sintermaterial sein.

Die Falschluftstromöffnung kann im Bereich der Einlassöffnung als Schrägbohrung ausgeführt sein. Durch die Schrägbohrung wird ein Eindringen von Sand verhindert.

Die Dosiereinrichtung kann eine Hutze über einer Einlassöffnung aufweisen. Die Hutze kann dazu ausgebildet sein, in Abwesenheit des Dosierluftstroms ein Eindringen von Sand in die Dosiereinrichtung zu verhindern. Eine Hutze kann eine Abdeckung sein. Die Hutze kann einen Spalt oder einen Kanal ausbilden, durch den die mitgerissene Luft und der mitgerissenen Sand angesaugt werden kann. Durch die Hutze kann der Sand in dem Sandbehälter sicher gelagert werden.

Die Dosiereinrichtung kann einen Aufgabetrichter aufweisen, durch den der Sandbehälter durch die Dosiereinrichtung restlos entleerbar ist. Durch den Trichter wird der Sand durch die Schwerkraft zu der Dosiereinrichtung transportiert.

Die Dosiereinrichtung kann Bohrungen aufweisen, die einen Trocknungsluftstrom in den Sandbehälter leiten. Die Bohrungen können schräg nach unten ausgebildet sein. Durch die Schräge wird ein Eindringen von Sand in die Bohrungen verhindert.

Die Dosiereinrichtung kann eine durch ein poröses Element verschlossene Öffnung aufweisen. Das poröse Element kann eine Sinterplatte sein. Der Trocknungsluftstrom kann durch das poröse Element in den Sandbehälter geleitet werden
Der Trocknungsluftstrom kann erwärmt und/oder getrocknet werden.

Der Sandvorrat im Sandbehälter kann durch den Trocknungsluftstrom getrocknet werden.

Die Sandungsvorrichtung kann einen Heizkörper aufweisen, der ein Heizelement und ein Wärmeübertragungselement aufweist, wobei das Heizelement dazu ausgebildet ist, elektrische Energie in Wärme umzuwandeln, und das Wärmeübertragungselement dazu ausgebildet ist, die Wärme von dem Heizelement an ein Gehäuse der Sandungsvorrichtung und einen Trocknungsluftstrom zu übertragen. Durch den Heizkörper kann der Sand in dem Sandbehälter getrocknet werden. Weiterhin kann die Sandungsvorrichtung erwärmt werden, um beispielsweise ein Vereisen zu verhindern.

Im Aufgabetrichter können Bohrungen für den Trocknungsluftstrom als Schrägbohrungen ausgeführt sein. Durch die Schrägbohrungen kann kein Sand in die Bohrungen eindringen.

Das Gehäuse kann mehrteilig ausgeführt sein, wobei in einem ersten Gehäuseteil eine um die Dosiereinrichtung umlaufende Nut angeordnet ist, in der der Heizkörper angeordnet ist. Die Nut kann durch einen zweiten Gehäuseteil verschlossen sein. In der Nut ist der Heizkörper gut geschützt.

Die Nut kann einen polygonalen Verlauf aufweisen. Die Nut kann einen sechseckigen Verlauf aufweisen. Durch die Polygonalität kann der Verlauf der Nut beabstandet zu anderen Bauelementen angeordnet sein. Beispielsweise kann die Nut so beabstandet zu Verbindungselementen, wie Schrauben oder Kanälen verlaufen.

Die Nut kann eine Tiefe aufweisen und der Heizkörper kann in entspanntem Zustand eine Höhe aufweisen, wobei die Höhe größer ist, als die Tiefe, und der Heizkörper in eingebautem Zustand von dem zweiten Gehäuseteil gequetscht ist. Durch die Quetschung kann eine gute Abdichtung gegen das Gehäuse und/oder eine gute Wärmeübertragung zu dem Gehäuse erreicht werden.

Das Wärmeübertragungselement kann eine Struktur zum Bereitstellen einer Wärmeübergangsfläche zum Trocknungsluftstrom und eine Kontaktfläche zu dem Gehäuse aufweisen, wobei die Wärmeübergangsfläche und die Kontaktfläche in einem vorbestimmten Flächenverhältnis stehen. Die Struktur kann als zumindest eine Rippe ausgebildet sein und eine große Wärmeübergangsfläche bereitstellen. Die Kontaktfläche kann eben sein. Durch die Struktur kann die Trocknungsluft effektiv erwärmt werden.

Die Rippe kann als Helix ausgebildet sein durch die der Trocknungsluftstrom strömt. Durch die Helix kann der Trocknungsluftstrom länger Kontakt mit der Wärmeübergangsfläche haben.

Das Wärmeübertragungselement kann einen Grundkörper aus einem Elastomer aufweisen, der das Heizelement umschließt. Ein Elastomer ist dauerelastisch und passt sich an die Nut an.

Das Elastomer kann mit zumindest einem Füllstoff ausgerüstet sein, wobei der Füllstoff dazu ausgebildet ist, eine Wärmeleitfähigkeit des Elastomers zu verändern, insbesondere zu erhöhen oder zu verringern. Der Füllstoff kann wärmeleitende Eigenschaften aufweisen. Der Füllstoff kann wärmeisolierende Eigenschaften aufweisen. Durch den Füllstoff kann das Elastomer an verschiedene Erfordernisse angepasst werden.

Das Elastomer kann an einer Wärmeübergangsfläche zum Trocknungsluftstrom mit einem Füllstoff ausgerüstet sein, der dazu ausgebildet ist, die Wärmeleitfähigkeit des Elastomers zu erhöhen. Alternativ oder ergänzend kann das Elastomer an einer Kontaktfläche zu dem Gehäuse mit einem Füllstoff ausgerüstet sein, der dazu ausgebildet ist, die Wärmeleitfähigkeit des Elastomers zu verringern. Dadurch kann eine Wärmeverteilung zwischen dem Gehäuse und der Trocknungsluft zugunsten der Trocknungsluft verschoben werden.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Blockschaltbild einer Sandungsvorrichtung gemäß einem Ausführungsbeispiel der vorliegenden Erfindung;
- Fig. 2: eine Darstellung einer Sandungsvorrichtung gemäß einem Ausführungsbeispiel der vorliegenden Erfindung;
- Fig. 3: eine Darstellung eines Heizkörpers gemäß einem Ausführungsbeispiel der vorliegenden Erfindung;
- Fig. 4: eine Darstellung einer Dosiereinrichtung für eine Sandungsvorrichtung gemäß einem Ausführungsbeispiel der vorliegenden Erfindung;
- Fig. 5: eine Darstellung einer Fördereinrichtung für eine Sandungsvorrichtung gemäß einem Ausführungsbeispiel der vorliegenden Erfindung;
- Fig. 6: eine Darstellung einer Entkopplungseinrichtung und einer Fördereinrichtung für eine Sandungsvorrichtung gemäß einem Ausführungsbeispiel der vorliegenden Erfindung;
- Fig. 7: eine Darstellung einer Fördereinrichtung für eine Sandungsvorrichtung gemäß einem weiteren Ausführungsbeispiel der vorliegenden Erfindung; und
- Fig. 8: ein Ablaufdiagramm eines Verfahrens zum Bereitstellen von Sand gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

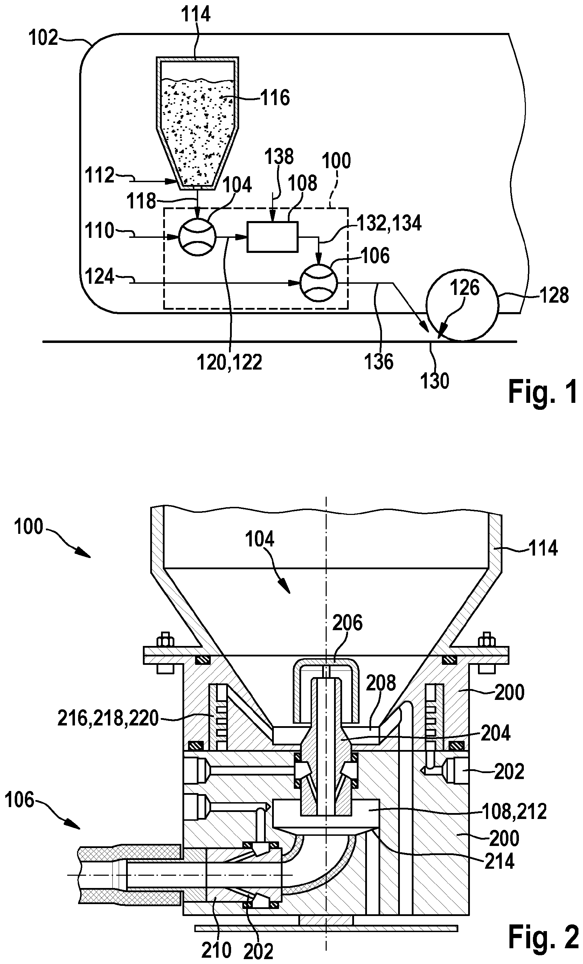

Fig. 1 zeigt ein Blockschaltbild einer Sandungsvorrichtung 100 für ein Schienenfahrzeug 102 gemäß einem Ausführungsbeispiel der vorliegenden Erfindung. Die Sandungsvorrichtung 100 weist eine Dosiereinrichtung 104, eine Fördereinrichtung 106 und eine Entkopplungseinrichtung 108 auf. Die Sandungsvorrichtung 100 ist eine Komponente des Schienenfahrzeugs 102. Die Dosiereinrichtung 104 ist dazu ausgebildet, eine gewünschte Sandmenge pneumatisch zu dosieren. Dazu verwendet die Dosiereinrichtung 104 einen Dosierluftstrom 110. Wenn der Dosierluftstrom 110 durch die Dosiereinrichtung 104 strömt, wird ein Falschluftstrom 112 durch einen resultierenden Unterdruck in der Dosiereinrichtung 104 mitgerissen. Der Falschluftstrom 112 ist von dem Dosierluftstrom 110 abhängig. Je größer der Dosierluftstrom 110 ist, umso größer ist der Falschluftstrom 112. Der Falschluftstrom 112 durchströmt einen Sandbehälter 114 mit Sand 116, wo durch den Falschluftstrom 112 der Sand 116 zumindest partiell fluidisiert wird und die Sandmenge mitgerissen wird. Die Sandmenge vermischt sich mit dem Falschluftstrom 112 zu einer ersten Zweiphasenströmung 118 aus Sand 116 und Luft. Die erste Zweiphasenströmung 118 umfasst mit dem Falschluftstrom 112 einen Eingangsluftstrom der Dosiereinrichtung 104. Die erste Zweiphasenströmung 118 vermischt sich wiederum in der Dosiereinrichtung 104 mit dem Dosierluftstrom 110 zu einer zweiten Zweiphasenströmung 120. Die zweite Zweiphasenströmung 120 umfasst mit dem Falschluftstrom 112 und dem Dosierluftstrom 110 einen Ausgangsluftstrom 122 der Dosiereinrichtung. Der Ausgangsluftstrom 122 transportiert die dosierte Sandmenge zu der Fördereinrichtung 106. Die Fördereinrichtung 106 ist dazu ausgebildet, die Sandmenge unter Verwendung eines Förderluftstroms 124 pneumatisch zu zumindest einer Streustelle 126 zu fördern. Die Streustelle 126 befindet sich an einem Rad 128 des Schienenfahrzeugs 102. Die Streustelle 126 ist über einen Sandleitschlauch mit der Sandungsvorrichtung 100 verbunden. Der Sand 116 dient zum Erhöhen der Reibung zwischen dem Rad 128 und der Schiene 130. Wenn der Förderluftstrom 124 durch die Fördereinrichtung 106 strömt, wird eine dritte Zweiphasenströmung 132 aus Sand 116 und Luft bzw. ein Eingangsluftstrom 134 der Fördereinrichtung 106 durch einen resultierenden Unterdruck in der Fördereinrichtung 106 mitgerissen. Der Eingangsluftstrom 134 ist vom Förderluftstrom 124 abhängig. Je größer der Förderluftstrom 124 ist, umso größer ist der Eingangsluftstrom 134. Der Eingangsluftstrom 134 und der Förderluftstrom 124 vermischen sich in der Fördereinrichtung 106 zu einem Ausgangsluftstrom der Fördereirichtung 106. Der Ausgangsluftstrom der Fördereirichtung 106 ist eine vierte Zweiphasenströmung 136 aus Sand 116 und Luft. Der Ausgangsluftstrom transportiert die Sandmenge zu der Streustelle 126.

Der Ausgangsluftstrom 122 der Dosiereinrichtung 104 ist abhängig von dem Dosierluftstrom 110. Der Eingangsluftstrom 134 der Fördereinrichtung 106 ist abhängig von dem Förderluftstrom 124. Der Ausgangsluftstrom 122 und der Eingangsluftstrom 134 können einen Unterschied aufweisen, während die Sandmenge gleich ist. Die Entkopplungseinrichtung 108 ist dazu ausgebildet, den Unterschied zwischen dem Ausgangsluftstrom 122 der Dosiereinrichtung und dem Eingangsluftstrom 134 der Fördereinrichtung pneumatisch auszugleichen. Dazu stellt die Entkopplungseinrichtung 108 einen Ausgleichsluftstrom 138 zum Ausgleichen des Unterschieds bereit. Damit entkoppelt die Entkopplungseinrichtung 108 die Dosiereinrichtung 104 von der Fördereinrichtung 106.

In Fig. 1 ist eine pneumatische Sanddosier- und -förderanlage 100 dargestellt. Um den Haftbeiwert zwischen Rad 128 und Schiene 130 bei Schienenfahrzeugen 102 zu verbessern, ist es unter bestimmten Umständen notwendig, Sand 116 zwischen Rad 128 und Schiene 130 zu streuen. Zu diesem Zweck werden Sandstreuanlagen 100 vor ausgewählten Rädern 128 der Schienenfahrzeuge 102 eingebaut. Die Sandstreuanlagen 102 bestehen aus den Hauptkomponenten Vorratsbehälter 114, Dosierer 104, Förderer 106 und Sandleitschlauch. Entsprechend der jeweiligen Einbausituation am Fahrzeug 102 kann der Verlauf des Sandleitschlauches sehr unterschiedlich sein. Somit ergeben sich auch unterschiedliche pneumatische Widerstände, welche die Zweiphasenströmung Sand-Luft im Sandleitschlauch erfährt und welche unterschiedliche Druckabfälle im Sandleitschlauch zwischen dessen Anfang und Ende bewirken. Dieser Druckabfall hat eine Rückwirkung auf die Funktion des Förderers 106. Die betroffenen Funktionen des Förderers 106 sind erreichbare Sandfördergeschwindigkeit und maximal möglicher Sanddurchsatz. Wird ein pneumatischer Förderer 106 gleichzeitig als pneumatischer Dosierer 104 eingesetzt oder sind ein pneumatischer Förderer 106 und ein pneumatischer Dosierer 106 hintereinander angebracht, dann hat die Rückwirkung des Druckabfalles im Sandleitschlauch auch eine Rückwirkung auf den Dosierer 104 und somit auf die Sandfördermenge.

Durch den hier vorgestellten Ansatz wird diese Rückwirkung auf die Sandfördermenge minimiert und im Idealfall eliminiert. Dabei wird möglichst wenig Verschleiß durch den stark abrasiven Sand zugelassen.

Dosierer 104 und Förderer 106 können derart getrennt werden, dass diese Rückwirkung durch Verwendung unterschiedlicher Wirkprinzipien für Dosierer 104 und Förderer 106 vermieden wird. Dabei können beispielsweise mechanische Kolbendosierer mit pneumatischen Strahldüsenförderern 106 kombiniert werden. Ebenfalls können mechanische Zellradschleusendosierer mit pneumatischen Förderern 106 kombiniert werden. Aufgrund der Verwendung mechanisch beweglicher Teile, wie Kolben und Zellräder für den Dosierer ist die Abrasion zwischen dem mechanisch bewegten Teil und dem Sand sehr hoch.

Es werden ein Verfahren und eine Vorrichtung 100 vorgestellt, bei welchen ein pneumatischer Dosierer 104 und ein pneumatischer Förderer 106 wirkungsvoll pneumatisch entkoppelt sind und somit eine Rückwirkung auf die Sandfördermenge minimiert oder eliminiert werden kann. Dabei repräsentiert die Zweiphasenströmung 118 die Sandfördermenge. Die Entkopplung wird dadurch erreicht, dass die Zweiphasenströmungen 120, 134 innerhalb einer Druckausgleichskammer durch eine Ausgleichsluftstromöffnung zur Umgebungsluft auf Umgebungsdruck gebracht werden. Die Ausgleichsluftstromöffnung ermöglicht somit einen Ausgleichsluftstrom 138, der aus der Differenz des Luftanteils 122 der Zweiphasenströmung 120, welcher sich aus der Summe von Dosierluftstrom 110 und Falschluftstrom 112 zusammensetzt, und dem Luftanteil 134 der Zweiphasenströmung 132 besteht.

Somit kann die Zweiphasenströmung 136 ohne Beeinflussung der die Sandfördermenge repräsentierenden Zweiphasenströmung 118 durch die Förderluft 124 eingestellt oder durch Veränderung des Verlaufes des Sandleitschlauches beeinflusst werden.

Dadurch ergibt sich eine rein pneumatische Dosier- und Förderanlage 100, die keine bewegten Teile innerhalb der Dosier- und Förderanlage 100 aufweist. Trotz der Verwendung der rein pneumatischen Dosier- und Förderanlage 100 ergibt sich eine Entkopplung von Dosierer 104 und Förderer 106. Weiterhin ergibt sich die Möglichkeit des Ausblasens des Sandleitschlauches von Restsand unabhängig von der Aktivierung der Dosierung. Zusätzlich sind die Dosierung und Förderung von der Dichtheit des Vorratsbehälters 114 unabhängig.

Fig. 2 zeigt eine Darstellung einer Sandungsvorrichtung 100 gemäß einem Ausführungsbeispiel der vorliegenden Erfindung. Die Sandungsvorrichtung 100 entspricht im Wesentlichen der Sandungsvorrichtung in Fig. 1. Die Sandungsvorrichtung 100 ist hier in einer Einbaulage dargestellt, sodass der Sand aus dem Sandbehälter 114 durch die Gravitation zu der Dosiereinrichtung 104 fließt. Die Sandungsvorrichtung 100 weist hier ein mehrteiliges Gehäuse 200 auf, das die Dosiereinrichtung 104, die Fördereinrichtung 106 und die Entkopplungseinrichtung 108 umschließt. An das Gehäuse 200 angeflanscht ist der Sandbehälter 114. Der Sandbehälter 114 ist an einem, der Sandungsvorrichtung 100 zugewandten Ende, als Trichter ausgeformt. An einem zulaufenden Ende des Trichters ist die Dosiereinrichtung 104 angeordnet. In dem dargestellten Ausführungsbeispiel sind die Dosiereinrichtung 104 und die Fördereinrichtung 106 als Ejektoren mit zumindest je zwei Ejektorbohrungen 202 zum Bereitstellen des Dosierluftstroms bzw. des Förderluftstroms ausgebildet. Die Ejektoren weisen eine konstruktiv festgelegte Förderrichtung auf. Die Ejektoren weisen je eine Einlassöffnung und eine Auslassöffnung auf. Die Förderrichtung des Ejektors der Dosiereinrichtung 104 ist von dem Sandbehälter 114 zu der Fördereinrichtung 106 ausgerichtet. Die Förderrichtung des Ejektors der Fördereinrichtung 106 weist von der Dosiereinrichtung 104 zu dem Sandleitschlauch.

Der Ejektor der Dosiereinrichtung 104 ist als in der Einbaulage vertikal ausgerichtetes erstes Rohr 204 ausgebildet. Das erste Rohr 204 ist in das Gehäuse 200 eingesetzt. Das erste Rohr 204 ragt in den Sandbehälter 114 hinein. Damit ist die Einlassöffnung der Dosiereinrichtung 104 in der Einbaulage höher angeordnet, als ein tiefster Punkt des Sandbehälters 114. An einer Austrittsstelle aus dem Gehäuse 200 weist das Rohr 204 eine konische Verjüngung auf. Ein Außendurchmesser des Rohrs 204 ist im Bereich des Sandbehälters 114 geringer, als im Gehäuse 200. Ein Innendurchmesser des Rohrs 204 ist konstant. Die Ejektorbohrungen 202 sind schräg zu einer Mittelachse des Rohrs 204 in einem Mantel des Rohrs 204 angeordnet. Die Ejektorbohrungen 202 weisen in die Förderrichtung. Die Ejektorbohrungen sind über einen ringförmig um das erste Rohr 204 verlaufenden Dosierluftstromkanal miteinander verbunden. Der Dosierluftstromkanal ist hier in dem Mantel angeordnet. Der Dosierluftstromkanal ist mit einem Dosierluftstromanschluss für den Dosierluftstrom verbunden. Der Dosierluftstromanschluss ist an einer Außenfläche des Gehäuses 200 angeordnet. Im Betrieb wird der Dosierluftstrom von dem Dosierluftstromanschluss in den Dosierluftstromkanal gepresst. In dem Dosierluftstromkanal verteilt sich der Dosierluftstrom gleichmäßig auf die Ejektorbohrungen 202. Der Dosierluftstrom strömt durch die Ejektorbohrungen 202 in das erste Rohr 204 und reißt die Falschluft in der Förderrichtung mit. Die Dosiereinrichtung 104 weist eine Hutze 206 über der Einlassöffnung auf. Die Hutze 206 ist dazu ausgebildet, in Abwesenheit des Dosierluftstroms ein Eindringen von Sand in die Dosiereinrichtung 104 zu verhindern. Zwischen der Hutze 206 und dem dünneren Teil des ersten Rohrs 204 ist ein ringförmiger Spalt ausgebildet, durch den der Falschluftstrom im Betrieb den Sand entgegen der Gravitation in die Dosiereinrichtung 104 befördert. Die Dosiereinrichtung 104 weist zumindest eine Falschluftstromöffnung 208 zur Umgebung auf. Die Falschluftstromöffnung 208 ist benachbart zu der Einlassöffnung der Dosiereinrichtung 104 angeordnet. Die Falschluftstromöffnung 208 ist dazu ausgebildet, den Falschluftstrom zum Fluidisieren von Sand im Bereich der Einlassöffnung bereitzustellen, wenn der Dosierluftstrom durch die Dosiereinrichtung 104 strömt. Zu der Falschluftstromöffnung 208 führt ein Falschluftstromkanal durch das Gehäuse 200. Der Falschluftstromkanal verläuft in Einbaulage senkrecht durch das Gehäuse 200. Im Bereich des Sandbehälters 114 weist der Falschluftstromkanal einen Knick auf und verläuft ab da näherungsweise parallel zu einer Behälterwand des trichterförmigen Endes des Sandbehälters 114. Dadurch kann der Sand in Einbaulage nicht entgegen der Gravitation in den Falschluftstromkanal eindringen. Die Falschluftstromöffnung 208 ist am tiefsten Punkt des Sandbehälters 114 angeordnet. Die Falschluftstromöffnung 208 ist in geringem Abstand zu dem ersten Rohr 204 angeordnet. Der Falschluftstromkanal ist auf das erste Rohr 204 gerichtet. Zwischen der Falschluftstromöffnung 208 und dem Spalt zwischen der Hutze 206 und dem ersten Rohr 204 ist ein Mischbereich angeordnet, in dem sich der Sand mit dem Falschluftstrom zu einer ersten Zweiphasenströmung vermischt bzw. fluidisiert wird, wenn die Falschluft von der Falschluftstromöffnung 208 in den Spalt strömt. Durch die Trichterform des Sandbehälters 114 kann der Sand aus dem Behälter durch die Gravitation in den Mischbereich nachrutschen. Die erste Zweiphasenströmung wird durch die Dosiereinrichtung 104 transportiert und vermischt sich in der Dosiereinrichtung 104 mit dem Dosierluftstrom zu einer zweiten Zweiphasenströmung. Zwischen der Dosiereinrichtung 104 und der Fördereinrichtung 106 ist ein Krümmer angeordnet, um die Zweiphasenströmung vor der Fördereinrichtung 106 um 90 Grad seitlich abzulenken.

Der Ejektor der Fördereinrichtung 106 ist als in Einbaulage horizontal ausgerichtetes zweites Rohr 210 ausgebildet. Das zweite Rohr 210 ist in das Gehäuse 200 eingesetzt. Die Ejektorbohrungen 202 sind wie bei der Dosiereinrichtung 104 schräg zu einer Mittelachse des Rohrs 210 in einem Mantel des Rohrs 210 angeordnet. Die Ejektorbohrungen 202 weisen in die Förderrichtung. Die Ejektorbohrungen sind über einen ringförmig um das zweite Rohr 210 verlaufenden Förderluftstromkanal miteinander verbunden. Der Förderluftstromkanal ist hier in dem Mantel angeordnet. Der Förderluftstromkanal ist mit einem Förderluftstromanschluss für den Förderluftstrom verbunden. Der Förderluftstromanschluss ist an einer Außenfläche des Gehäuses 200 angeordnet. Im Betrieb wird der Förderluftstrom von dem Förderluftstromanschluss in den Förderluftstromkanal gepresst. In dem Förderluftstromkanal verteilt sich der Förderluftstrom gleichmäßig auf die Ejektorbohrungen 202. Der Förderluftstrom strömt durch die Ejektorbohrungen 202 und reißt im zweiten Rohr 210 eine dritte Zweiphasenströmung aus dem mitgerissenen Sand von der Dosiereinrichtung 104 und Luft in der Förderrichtung in den Sandleitschlauch mit. In dem zweiten Rohr 210 vermischt sich der Förderluftstrom mit der dritten Zweiphasenströmung zu einer vierten Zweiphasenströmung. Das zweite Rohr 210 weist einen größeren Innendurchmesser auf, als das erste Rohr 204. Anschließend an das zweite Rohr 210 weist die Fördereinrichtung 106 einen Anschlussflansch für den Sandleitschlauch auf, der über die Außenfläche des Gehäuses 200 übersteht.

Zwischen der Dosiereinrichtung 104 und der Fördereinrichtung 106 ist die Entkopplungseinrichtung 108 angeordnet. Die Entkopplungseinrichtung 108 weist eine Druckausgleichskammer 212 zum Koppeln des Ausgleichsluftstroms auf. Die Druckausgleichskammer 212 ist in einer Verbindungsleitung zwischen der Dosiereinrichtung 104 und der Fördereinrichtung 106 angeordnet. Die Druckausgleichskammer 212 weist einen, zu der Fördereinrichtung 106 hin schräg ausgeführten Boden auf. Der schräge Boden ist als Trichter zu der Verbindungsleitung ausgeführt. Der Boden ist dazu ausgebildet, Sandablagerungen in der Entkopplungseinrichtung 108 zu verhindern. Durch den Trichter rutscht abgelagerter Sand in Richtung der Fördereinrichtung 106. Die Druckausgleichskammer 212 weist eine Ausgleichsluftstromöffnung 214 zur Umgebung für den Ausgleichsluftstrom auf. Die Ausgleichsluftstromöffnung 214 ist über einen Ausgleichsluftstromkanal durch das Gehäuse 200 mit der Umgebung verbunden. In der Druckausgleichskammer 212 herrscht also Umgebungsdruck. Der Ausgleichsluftstromkanal verläuft in Einbaulage senkrecht durch das Gehäuse 200. Die Öffnungen des Falschluftstromkanals und des Ausgleichluftstromkanals sind durch eine vorgelagerte Platte vor Verschmutzung, beispielsweise durch Wasser und/oder Feststoffe, geschützt.

Wenn der Ausgangsluftstrom, der einen Luftanteil der zweiten Zweiphasenströmung aus der Dosiereinrichtung 104 repräsentiert, und der Eingangsluftstrom, der den Luftanteil der dritten Zweiphasenströmung in die Fördereinrichtung 106 repräsentiert, nicht übereinstimmen, strömt der Ausgleichsluftstrom durch die Ausgleichsluftstromöffnung 214 in die Druckausgleichskammer 212 ein oder aus.

Ausgehend von einer Trennfuge zwischen zwei Gehäuseteilen des Gehäuses 200 weist eines der Gehäuseteile eine ringförmig um die Dosiereinrichtung umlaufende Nut auf. Die Nut ist konzentrisch zu der Dosiereinrichtung 104 ausgerichtet. Die Nut ist im Bereich des trichterförmigen Endes des Sandbehälters 114 angeordnet. In der Nut ist ein Heizkörper 216 für die Sandungsvorrichtung 100 angeordnet. Die Nut ist durch einen weiteren Gehäuseteil verschlossen. Der Heizkörper 216 weist ein Heizelement 218 und ein Wärmeübertragungselement 220 auf. Das Heizelement 218 ist ein Heizdraht und dazu ausgebildet, elektrische Energie in Wärme umzuwandeln. Der Heizdraht 218 wird heiß, wenn elektrischer Strom durch den Heizdraht 218 fließt. Das Wärmeübertragungselement 220 ist dazu ausgebildet, die Wärme von dem Heizelement 218 an das Gehäuse 200 und auf einen Trocknungsluftstrom zu übertragen.

Ein erster Trocknungsluftstromkanal verbindet einen Trocknungsluftstromanschluss an einer Außenfläche des Gehäuses 200 mit einer von dem Sandbehälter 114 abgewandten ersten Seite der Nut. Von einer, dem Sandbehälter 114 zugewandten zweiten Seite der Nut führt zumindest ein zweiter Trocknungsluftstromkanal näherungsweise parallel zu der Behälterwand des trichterförmigen Endes des Sandbehälters 114 zu zumindest einer Trocknungsluftstromöffnung. Dadurch kann der Sand in Einbaulage nicht entgegen der Gravitation in den zweiten Trocknungsluftstromkanal eindringen. Die Trocknungsluftstromöffnung ist am tiefsten Punkt des Sandbehälters 114 in dem Mischbereich angeordnet. Die Trocknungsluftstromöffnung ist in geringem Abstand zu dem ersten Rohr 204 angeordnet. Der zweite Trocknungsluftstromkanal ist auf das erste Rohr 204 gerichtet.

Wenn der Trocknungsluftstrom über den Trocknungsluftstromanschluss bereitgestellt wird, strömt er durch den ersten Trocknungsluftstromkanal zu dem Heizkörper 216. Wenn das Heizelement 218 in Betrieb ist, nimmt der Trocknungsluftstrom an dem Heizkörper 216 Wärmeenergie auf. Von dem Heizkörper 216 strömt der Trocknungsluftstrom durch den zweiten Trocknungsluftstromkanal zu der Trocknungsluftstromöffnung in den Mischbereich.

Wenn die Dosiereinrichtung 104 in Betrieb ist und fluidisierten Sand aus dem Mischbereich absaugt, dann ersetzt der Trocknungsluftstrom zumindest zum Teil den Falschluftstrom, der sich entsprechend verringert, um ausgeglichene Druckverhältnisse zu erhalten. Der warme Trocknungsluftstrom erwärmt und/oder trocknet nun die Dosiereinrichtung 104, die Entkopplungseinrichtung 108 und in Folge auch die Fördereinrichtung 106.

Wenn die Dosiereinrichtung 104 nicht in Betrieb ist, strömt der Trocknungsluftstrom zum Teil aus dem Mischbereich in den Sandbehälter 114, wo er den Sand erwärmt und/oder trocknet. Dadurch bleibt der Sand rieselfähig und eine Betriebssicherheit der Sandungsvorrichtung 100 wird erhöht. Ein anderer Teil strömt durch den Falschluftstromkanal in die Umgebung, wobei der Falschluftstromkanal erwärmt und/oder getrocknet wird.

Ein Teil kann auch durch das erste Rohr 204 und weiter durch die Ausgleichsluftstromöffnung 214 und durch das zweite Rohr 210 und den Sandleitschlauch strömen, wobei diese erwärmt und/oder getrocknet werden.

In einem Ausführungsbeispiel weist das Wärmeübertragungselement 220 einen Grundkörper aus einem Elastomer auf, der den Heizdraht 218 umschließt. In nicht eingebautem Zustand ist der Heizkörper 216 schmaler, als die Nut. Dabei weist der Heizkörper 216 in entspanntem Zustand eine größere Höhe auf, als die Nut tief ist. Durch die geringere Breite, als die Nut kann der Heizkörper 216 leicht in die Nut eingelegt werden. Wenn die Gehäuseteile zusammengefügt werden, wird das Elastomer gequetscht, wodurch sich Höhe des Heizkörpers 216 an die Tiefe der Nut anpasst. Dabei vergrößert sich die Breite des Heizkörpers 216, wodurch das Wärmeübertragungselement 220 unmittelbaren Kontakt zu dem Gehäuse 200 bekommt. Durch den direkten Kontakt wird ein guter Wärmeübergang von dem Wärmeübertragungselement 220 auf das Gehäuse 200 ermöglicht. Wenn der Heizkörper 216 in Betrieb ist, ohne dass der Trocknungsluftstrom bereitgestellt wird, dann wird die Wärmeenergie vorwiegend auf das Gehäuse 200 übertragen, das sich dadurch erwärmt.

In einem Ausführungsbeispiel weist das Wärmeübertragungselement 220 eine Struktur zum Bereitstellen einer Wärmeübergangsfläche zum Trocknungsluftstrom und eine Kontaktfläche zu dem Gehäuse 200 auf. Die Wärmeübergangsfläche und die Kontaktfläche stehen in einem vorbestimmten Flächenverhältnis. Die Wärmeübergangsfläche zum Trocknungsluftstrom ist durch eine helixförmige, entlang einer ersten Seite des Heizkörpers 216 verlaufende Rippe ausgebildet. Die Rippe ist aus dem Elastomer ausgebildet und liegt an einer ersten Seitenfläche der Nut an und dichtet so benachbarte Windungen des resultierenden Trocknungsluftstromkanals gegeneinander ab. Der Trocknungsluftstrom wird durch die Rippe spiralförmig entlang des Heizkörpers 216 geführt, wodurch sich eine lange Wegstrecke zum Aufnehmen der Wärmeenergie ergibt. Eine zweite Seite des Heizkörpers 216 weist eine geriffelte Oberflächenstruktur auf. Die Oberflächenstruktur liegt an einer zweiten Seitenfläche der Nut an. Durch die geriffelte Oberflächenstruktur ist die Kontaktfläche zu dem Gehäuse 200 gegenüber einer glatten Oberfläche verringert. Die Wärmeübergangsfläche ist wesentlich größer, als die Kontaktfläche, um die unterschiedlichen Wärmeübergangskoeffizienten von dem Heizkörper 216 zu dem Trocknungsluftstrom und dem Heizkörper 216 zu dem Gehäuse 200 zu berücksichtigen.

Im dargestellten Ausführungsbeispiel weist die Rippe in Richtung der Dosiereinrichtung 104. Die geriffelte Oberfläche weist von der Dosiereinrichtung 104 weg.

In einem nicht gezeigten Ausführungsbeispiel weist die geriffelte Oberfläche in Richtung der Dosiereinrichtung 104. Die Rippe weist von der Dosiereinrichtung 104 weg.

In einem Ausführungsbeispiel ist das Elastomer mit zwei Füllstoffen ausgerüstet. Der erste Füllstoff ist dazu ausgebildet, eine Wärmeleitfähigkeit des Elastomers zu erhöhen. Der zweite Füllstoff ist dazu ausgebildet, die Wärmeleitfähigkeit des Elastomers zu verringern. An der Wärmeübergangsfläche zum Trocknungsluftstrom ist das Elastomer mit dem ersten Füllstoff ausgerüstet, der dazu ausgebildet ist, die Wärmeleitfähigkeit des Elastomers zu erhöhen. An der Kontaktfläche zu dem Gehäuse 200 ist das Elastomer mit dem zweiten Füllstoff ausgerüstet, der dazu ausgebildet ist, die Wärmeleitfähigkeit des Elastomers zu verringern.

In einem Ausführungsbeispiel besteht der Dosierer 104 aus den Hauptelementen Gehäuse 200, Ejektorrohr 204, Hutze 206, Falschluftzuführungen 208, von denen vereinfacht nur eine dargestellt ist, und einem Luftanschluss sowie einem integrierten Heizkörper 216 innerhalb einer Heizkammer, den zugehörigen Schrägbohrungen, von denen vereinfacht nur eine dargestellt ist, und dem Anschluss für den Trocknungsluftstrom.

In einem Ausführungsbeispiel besteht der Förderer 106 aus den Hauptelementen Gehäuse 200, Druckausgleichkammer 212, Ausgleichsluftstromöffnungen 214, von denen vereinfacht nur eine dargestellt ist, Krümmer, Ejektorrohr 210, Schlauchstutzen und einem Luftanschluss.

Im dargestellten Ausführungsbeispiel ist das Gehäuse 200 des Dosierers 106 an den Vorratsbehälter 114 so angebunden, dass gemeinsam mit dem Aufgabetrichter der Vorratsbehälter 114 über die Vorrichtung 100 vollständig entleert werden kann und ein gleichmäßiger Sandfluss erreicht wird.

Im dargestellten Ausführungsbeispiel ist der Dosierer 104 ist mit dem Förderer 106 über eine Schnittstelle zwischen dem unteren Ende des Ejektorrohrs 204 und der Druckausgleichskammer 212 verbunden.

In einem Ausführungsbeispiel ist die Druckausgleichskammer 212 unten als Aufgabetrichter ausgeformt, damit der Sand nicht in der Druckausgleichskammer 212 liegen bleiben kann.

In einem Ausführungsbeispiel sind die Falschluftstromöffnung 208 und die Ausgleichsluftstromöffnung 214 beide durch ihre nach unten führenden Luftkanäle und durch ein Schutzblech, welches durch einen Abstandshalter gehalten wird, gegen äußere Verschmutzungen und gegen Wassereintritt geschützt.

Der Sandleitschlauch ist über den Schlauchstutzen mit der Vorrichtung 100 verbunden.

Im Betrieb wird der im Vorratsbehälter 114 vorrätige Sand durch die Form der Hutze 206 am selbstständigen Entleeren gehindert. Außerdem hindern die Schrägbohrungen für den Trocknungsluftstrom und den Falschluftstrom den Sand am Eindringen in die Luftkanäle und die Heizkammer.

Durch Anlegen eines Dosierluftstroms am Dosierluftstromanschluss wird durch die Ejektorbohrungen 202 im oberen Teil des Ejektorrohres 204 ein Unterdruck und in Folge ein Luftstrom durch das Ejektorrohr 204 erzeugt. Der Unterdruck und der Luftstrom saugen den Sand an und heben ihn über die von der Hutze 206 und dem Ejektorrohr 204 gebildete Potenzialschwelle. Dabei wird ein Falschluftstrom über die Bohrung angesaugt. Somit wird der Sand in der ersten Zweiphasenströmung in Abhängigkeit der Stärke des Dosierluftstroms und unabhängig von der Dichtheit des Vorratsbehälters 114 dosiert und in die Druckausgleichskammer 212 eingebracht. In der Druckausgleichkammer 212 weitet sich der Sandstrahl leicht auf und der Sand strömt bedingt durch seine Massenträgheit weiter in den Krümmer. Da der Sand dabei nur geringfügig abgebremst wird, kann seine kinetische Energie zu seiner weiteren Förderung innerhalb der dritten Zweiphasenströmung genutzt werden. Dabei bildet sich ein Ausgleichsluftstrom so aus, dass die Druckausgleichskammer 212 den Umgebungsdruck aufweist, und vermeidet so eine Rückwirkung auf die Sandmenge in den Zweiphasenströmungen. Sand, der aufgrund des stochastischen Verhaltens nicht in den Krümmer trifft, wird durch den Aufgabetrichter ebenfalls in den Krümmer geleitet. Sehr leichte Sandanteile können direkt in die Bohrung des Ausgleichluftstromkanals und weiter ungenutzt ohne Verstopfungsgefahr der Anlage ins Freie gelangen.

Durch das mit dem Dosierluftstrom gleichzeitige Anlegen eines Förderluftstroms am Förderluftstromanschluss wird durch die Ejektorbohrungen 202 im rechten Teil des Ejektorrohres 210 ein Unterdruck und in Folge ein Luftstrom durch das Ejektorrohr 210 erzeugt. Die dabei angesaugte Falschluft wird durch einen Teil des Ausgleichsluftstroms, welcher durch die Bohrung 214 strömt, bereitgestellt. Der Ausgleichsluftstrom kann in Abhängigkeit des Arbeitspunktes in oder aus der Druckausgleichskammer 212 strömen. Der Arbeitspunkt ist abhängig vom Dosierluftstrom, vom Förderluftstrom, vom Widerstand des Sandleitschlauches und/oder vom Wirkungsquerschnitt des Sandes. Der Ausgleichsluftstrom ist eine Überlagerung des Luftanteils der zweiten Zweiphasenströmung mit dem zusätzlich benötigten oder zuviel vorhandenen Falschluftstrom für den Förderer 106. Der im Ejektorrohr 210 vorhandene Luftstrom fördert den Sand weiter durch den Sandschlauch, welcher über den Stutzen, mit dem Ejektorrohr 210 verbunden ist, zwischen Rad und Schiene.

Nach Abschalten des Dosierluftstroms wird der im Sandleitschlauch noch vorhandene Sand durch den noch aktiven Förderluftstrom aus dem Sandleitschlauch befördert ohne, dass Sand aus dem Vorratsbehälter 114 dosiert wird. Der Förderluftstrom wird erst nach dem vollständigen Entleeren des Sandleitschlauches abgeschaltet.

Eine Vorrichtung 100 zum Dosieren und Fördern von Sand 116 für Sandstreuanlagen bei Schienenfahrzeugen ist dadurch gekennzeichnet, dass der pneumatische Dosierer 104 und der pneumatische Förderer 106 durch eine Druckausgleichskammer 212 mit angeschlossener Ausgleichsluftstromöffnung 214 entkoppelt sind.

Im unteren Bereich des Aufgabetrichters sind Schrägbohrungen im Gehäuse 200 für den Falschluftstrom des Dosierers 104 vorhanden.

Der Dosierer 104 ist durch ein Ejektorrohr 204 mit Ejektorbohrungen 202 realisiert.

Der Förderer 106 ist durch ein Ejektorrohr 210 mit Ejektorbohrungen 202 realisiert.

In einem Ausführungsbeispiel wird eine restlose Entleerung des Sandbehälters 114 durch einen entsprechend geformten Aufgabetrichter, welcher Teil der Vorrichtung 100 ist, realisiert.

Im Aufgabetrichter sind Schrägbohrungen im Gehäuse 200 für die Trocknungsluft und ein Heizkörper 216 zum Erwärmen des Trocknungsluftstroms sowie des Gehäuses 200 vorhanden.

Der Heizkörper 216 besitzt eine helixförmige Struktur, welche die Trocknungsluft vom Trocknungsluftanschluss zu den Schrägbohrungen innerhalb der Heizkammer führt und somit die Wärme gleichmäßig an die Trocknungsluft abgibt.

Die Wärmeübergangskoeffizienten Heizkörper 216 auf Trocknungsluft und Heizkörper 216 auf Gehäuse 200 sind so unterschiedlich, dass die Wärme optimal auf Trocknungsluft und Gehäuse 200 aufgeteilt wird.

In einem Ausführungsbeispiel sind die unterschiedlichen Wärmeübergangskoeffizienten durch unterschiedlich thermisch leitfähige Materialien realisiert.

In einem Ausführungsbeispiel sind die unterschiedlichen Wärmeübergangskoeffizienten durch unterschiedliche thermische Oberflächenkontakte realisiert.

Die Schrägbohrungen im Gehäuse 200 für den Falschluftstrom des Dosierers sind so angeordnet, dass der Sand in diesem Bereich fluidisiert wird.

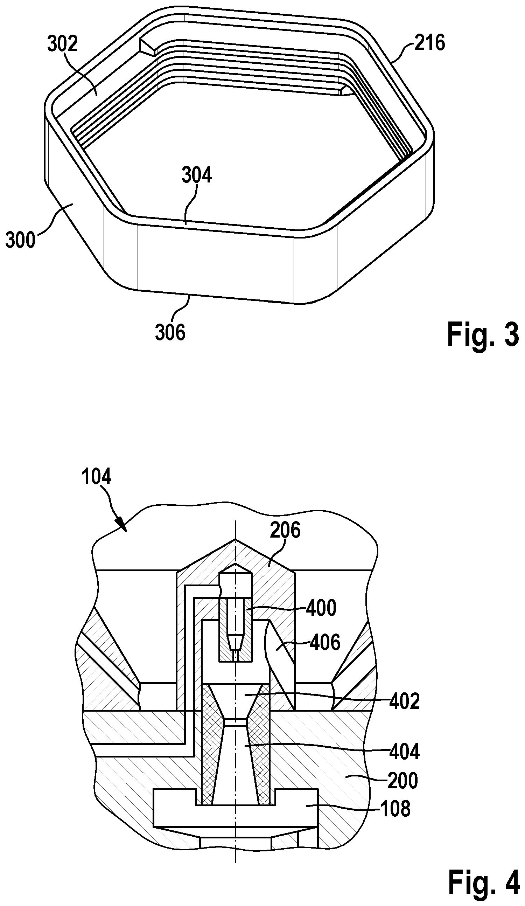

Fig. 3 zeigt eine Darstellung eines Heizkörpers 216 gemäß einem Ausführungsbeispiel der vorliegenden Erfindung. Der Heizkörper 216 entspricht im Wesentlichen dem Heizkörper in Fig. 2. Der Heizkörper 216 ist wie in Fig. 2 ringförmig geschlossen. Der Heizkörper 216 weist eine, von der Kreisform abweichende Außenkontur auf. Der Heizkörper 216 weist eine polygonale Außenkontur auf.

Im dargestellten Ausführungsbeispiel ist der Heizkörper 216 als sechseckiger Ring 300 ausgeführt. Das Sechseck weist abgerundete Kanten auf. Auf einer Innenseite des Rings 300 ist die helixförmige Rippe 302 mit drei vollständigen Windungen angeordnet, sodass sich im Zwischenraum zwischen den Windungen der spiralförmige Trocknungsluftstromkanal ausbildet, wenn der Heizkörper 216 in einer entsprechend ausgeformten Nut im Gehäuse der Sandungsvorrichtung angeordnet ist. Die Rippe 302 weist einen trapezförmigen Querschnitt auf. Der Ring 300 weist eine Stirnfläche 304 und eine Bodenfläche 306 auf, die am Gehäuse anliegen, wenn der Heizkörper 216 in die Nut eingelegt ist und die Gehäuseteile miteinander verbunden sind.

Die von der Kreisform abweichende Außenkontur ermöglicht eine ringförmig geschlossene Form des Heizkörpers 216. Im Bereich der geraden Teilstücke des Heizkörpers 216 und/oder im Bereich der Ecken des Heizkörpers 216 können Befestigungselemente, Leitungen und/oder Verbindungselemente im Gehäuse angeordnet sein, ohne den Heizkörper zu unterbrechen.

Fig. 4 zeigt eine Darstellung einer Dosiereinrichtung 104 für eine Sandungsvorrichtung gemäß einem Ausführungsbeispiel der vorliegenden Erfindung. Die Dosiereinrichtung 104 ist wie in Fig. 2 dargestellt, in der Sandungsvorrichtung angeordnet. Im Gegensatz zu Fig. 2 ist die Dosiereinrichtung 104 als Injektor mit einer Injektordüse 400 zum Bereitstellen des Dosierluftstroms ausgeführt. Der Injektor ist analog zu einer Strahlpumpe ausgeführt. Die Injektordüse 400 ist koaxial zu einer Fangdüse 402 mit anschließendem Diffusor 404 ausgerichtet. Die Fangdüse verengt sich trichterförmig bis zu einem Diffusorhals, an dem die Fangdüse ihren geringsten Durchmesser aufweist. Ab da wird der Durchmesser erneut größer. Wenn der Dosierluftstrom als Strahl aus der Injektordüse 400 strömt, erfolgt eine Impulsübertragung auf ein Saugmedium in der Fangdüse 402. Das Saugmedium ist im Betrieb der Dosiereinrichtung 104 die erste Zweiphasenströmung aus Falschluft und Sand. Der Strahl vermischt sich in der Fangdüse 402 mit dem Saugmedium zu der zweiten Zweiphasenströmung. Das Saugmedium wird in die Fangdüse 402 mitgerissen und dabei beschleunigt. Der Strahl weitet sich ab der Injektordüse 400 auf und erreicht im Diffusorhals näherungsweise den Durchmesser des Diffusorhalses. Im Diffusorhals erreicht die zweite Zweiphasenströmung ihre höchste Geschwindigkeit und den niedrigsten Druck. Ab hier weisen das Saugmedium und der Strahl den gleichen Druck auf. Im Diffusor 404 expandiert die zweite Zweiphasenströmung bis auf den Enddurchmesser des Diffusors 404. Dabei wird die zweite Zweiphasenströmung abgebremst und wieder auf den Druck komprimiert, der an dem Enddurchmesser herrscht. Da in der Entkopplungseinrichtung 108 Umgebungsdruck herrscht, herrscht im Diffusorhals ein deutlicher Unterdruck, der die erste Zweiphasenströmung durch Zugangsbohrungen 406 aus dem Mischbereich anzieht. Die Injektordüse 400 ist hier in der Hutze 206 angeordnet. Der Dosierluftstromkanal ist in einer Wand der Hutze 206 angeordnet. Die Zugangsbohrungen 406 sind schräg in der Wand angeordnet. In Einbaulage der Sandungsvorrichtung weisen sie schräg nach unten, um ein Eindringen von Sand in die Dosiereinrichtung 104 außerhalb des Betriebs zu verhindern. Die Injektordüse 400 und die Fangdüse 404 mit dem Diffusor 404 sind wie in Fig. 2 in das Gehäuse 200 eingesetzt.

Der in Fig. 4 dargestellte Dosierer 104 entspricht im Wesentlichen dem in Fig. 2 dargestellten Ausführungsbeispiel. Im Gegensatz dazu ist der Dosierer 104 mit einer Strahldüse ausgeführt. Der Dosierer 104 unterscheidet sich in den Elementen Injektordüse 400 mit Diffusor 404, Hutze 206 mit Schrägbohrungen, von denen vereinfacht nur eine dargestellt ist, und der Zuführung des Dosierluftstroms von der Darstellung in Fig. 2. Das Gehäuse 200 ist entsprechend der Luftführung gegenüber Fig. 2 angepasst. Alle anderen Positionen sind identisch den Positionen des Ausführungsbeispiels in Fig. 2. Der Dosierer 104 ist durch eine Injektordüse 400 mit Diffusor 404 realisiert.

Funktional ergibt sich ein Unterschied gegenüber dem Ausführungsbeispiel in Fig. 2. Durch Anlegen des Dosierluftstroms an der Zuführung durch die Injektordüse 400 oberhalb des Diffusors 404 wird ein Unterdruck und in Folge ein Luftstrom durch den Diffusor 404 erzeugt. Der Unterdruck und der Luftstrom saugen den Sand an und heben ihn über die von den Schrägbohrungen gebildete Potenzialschwelle.

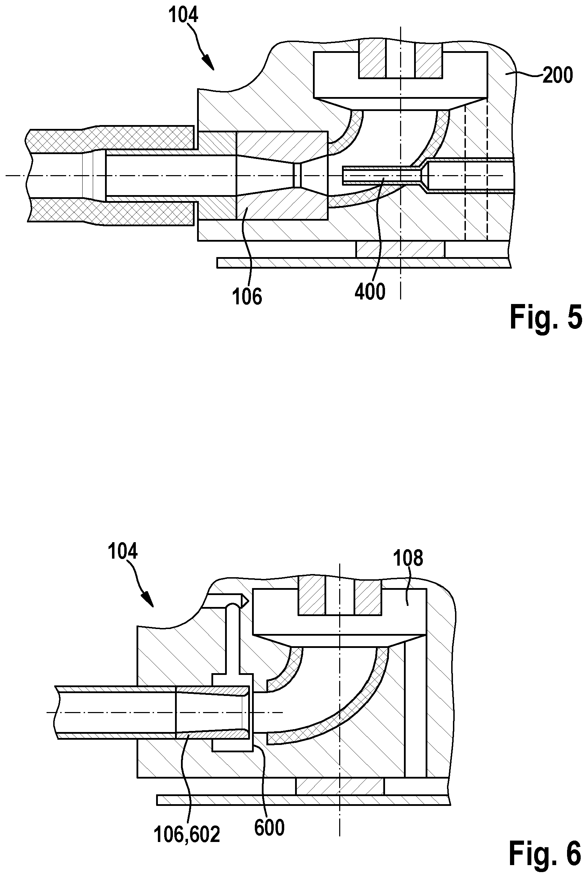

Fig. 5 zeigt eine Darstellung einer Fördereinrichtung 106 für eine Sandungsvorrichtung gemäß einem Ausführungsbeispiel der vorliegenden Erfindung. Die Fördereinrichtung 106 ist wie in Fig. 2 dargestellt, in der Sandungsvorrichtung angeordnet. Im Gegensatz zu Fig. 2 ist die Fördereinrichtung 106 als Injektor mit einer Injektordüse 400 zum Bereitstellen des Förderluftstroms ausgeführt. Die Funktion des Injektors ist wie in Fig. 4 beschrieben. Das Saugmedium ist hier die in Fig. 2 beschriebene dritte Zweiphasenströmung. Durch das Vermischen mit dem Förderluftstrom entsteht in dem Injektor die vierte Zweiphasenströmung. Die Injektordüse 400 ist hier als horizontal in den Krümmer hineinragendes Rohr ausgeführt. Der Förderluftstromkanal erstreckt sich in Verlängerung der Injektordüse 400 geradlinig zu der Seitenfläche des Gehäuses 200.

Der in Fig. 5 dargestellte Förderer 106 entspricht im Wesentlichen dem in Fig. 2 dargestellten Ausführungsbeispiel. Im Gegensatz dazu ist der Förderer 106 mit einer Strahldüse ausgeführt. Der Förderer 106 unterscheidet sich in den Elementen Gehäuse 200, Krümmer und Injektordüse 400 mit Diffusor von der Darstellung in Fig. 2. Der Förderer 106 ist durch eine Injektordüse 400 mit Diffusor realisiert.

Funktional ergibt sich ein Unterschied gegenüber dem Ausführungsbeispiel in Fig. 2. Durch das mit dem Dosierluftstrom gleichzeitige Anlegen des Förderluftstroms an die Zuführung durch die Injektordüse 400 wird im rechten Teil des Diffusors ein Unterdruck und in Folge ein Luftstrom durch den Diffusor erzeugt.

Fig. 6 zeigt eine Darstellung einer Entkopplungseinrichtung 108 und einer Fördereinrichtung 106 für eine Sandungsvorrichtung gemäß einem Ausführungsbeispiel der vorliegenden Erfindung. Die Fördereinrichtung 106 und die Entkopplungseinrichtung 108 sind wie in Fig. 2 dargestellt, in der Sandungsvorrichtung angeordnet. Die Entkopplungseinrichtung 108 entspricht der Entkopplungseinrichtung in Fig. 2. Im Gegensatz zu Fig. 2 ist die Fördereinrichtung 106 als Luftverstärker mit einem Ringspalt 600 zum Bereitstellen des Förderluftstroms ausgeführt. Der Förderluftstrom tritt aus dem Ringspalt 600 mit nahezu Schallgeschwindigkeit aus. Der Förderluftstrom verläuft von dem Ringspalt aufgrund einer Geometrie der Düse 602 entlang einer Wand der Düse 602 und weitet sich dabei zunehmend auf. Wie beim Injektor in Fig. 4 wird das Saugmedium, hier die dritte Zweiphasenströmung, mitgerissen und beschleunigt, wodurch der Unterdruck entsteht, der die dritte Zweiphasenströmung ansaugt. Der Förderluftstrom vermischt sich mit der dritten Zweiphasenströmung zu der vierten Zweiphasenströmung.

In einem Ausführungsbeispiel weist die Dosiereinrichtung einen Luftverstärker, wie er in Fig. 6 dargestellt ist, auf.

Der in Fig, 6 dargestellte Förderer 106 weist einen Luftverstärker auf. Der Förderer 106 unterscheidet sich in den Elementen Gehäuse 200 und der Luftverstärkerdüse 602. Der Förderer 106 ist durch einen Luftverstärker realisiert.

Funktional ergibt sich als Unterschied gegenüber den in den Figuren 2 und 4 gezeigten Ausführungsbeispielen, dass durch das mit dem Dosierluftstrom gleichzeitige Anlegen eines Förderluftstroms an die Zuführung ein Unterdruck rechts neben der Luftverstärkerdüse entsteht, der in Folge einen Luftstrom erzeugt, welcher den Sand ansaugt und weiter durch die Düse 602 transportiert.

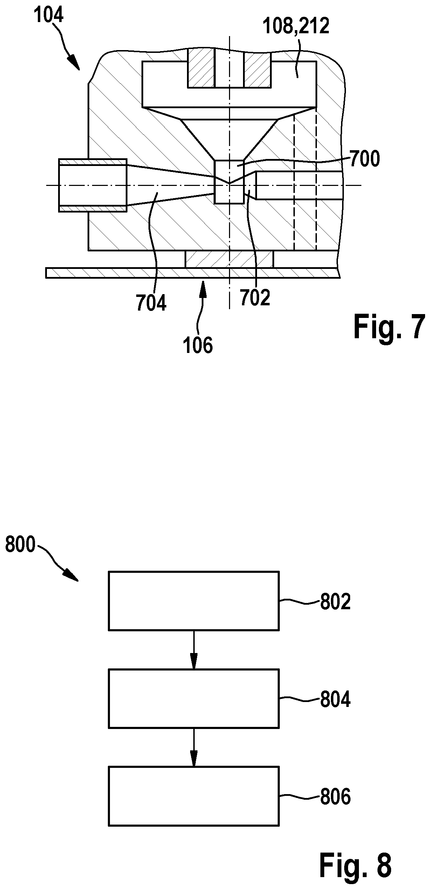

Fig. 7 zeigt eine Darstellung einer Fördereinrichtung 106 für eine Sandungsvorrichtung gemäß einem weiteren Ausführungsbeispiel der vorliegenden Erfindung. Die Fördereinrichtung 106 weist eine Venturidüse mit zumindest einem Abnahmerohr 700 zum Zuführen der Sandmenge auf. Die Venturidüse besteht aus einer Düse 702 und einem nachgelagerten Diffusor 704. Die Düse 702 beschleunigt den Förderluftstrom. Dabei sinkt der Druck im Förderluftstrom. Am Übergang von der Düse 702 zum Diffusor 704 ist das Abnahmerohr 700 angeordnet. Durch den Unterdruck wird das Saugmedium angesaugt und mit in den Diffusor 704 gerissen. Der Diffusor 704 mündet in dem Stutzen für den Sandleitschlauch. Das Abnahmerohr 700 ist unmittelbar mit der Entkopplungseinrichtung 108 verbunden. Ein der Entkopplungseinrichtung 108 zugewandtes Ende des Abnahmerohrs 700 ist zusätzlich zu der Abschrägung am Boden der Druckausgleichskammer 212 trichterförmig aufgeweitet, um den aus der Dosiereinrichtung 104 austretenden zweiten Zweiphasenstrom in die Engstelle der Venturidüse zu bündeln.

Der in Fig, 7 dargestellte Förderer 106 weist ein Venturirohr auf. Der Förderer 106 unterscheidet sich in den Elementen Gehäuse 200 und dem Venturirohr, bestehend u.a. aus der Zuführung 700 und dem Diffusor 704. Der Förderer 106 ist durch ein Venturirohr 602 realisiert.

Als funktionaler Unterschied gegenüber den in den Figuren 2, 4 und 6 gezeigten Ausführungsbeispielen ergibt sich, dass durch das mit dem Dosierluftstrom gleichzeitige Anlegen eines Förderluftstroms an die Zuführung ein Unterdruck im unteren Teil des Aufgabetrichters entsteht und in Folge ein Luftstrom erzeugt wird, welche den Sand ansaugt und weiter durch den Diffusor 704 transportiert.

Fig. 8 zeigt ein Ablaufdiagramm eines Verfahrens 800 zum Bereitstellen von Sand für ein Schienenfahrzeug gemäß einem Ausführungsbeispiel der vorliegenden Erfindung. Das Verfahren 800 weist einen Schritt 802 des Dosierens, einen Schritt 804 des Förderns und einen Schritt 806 des Entkoppelns auf. Im Schritt 802 des Dosierens wird eine zu streuende Sandmenge unter Verwendung eines Dosierluftstroms dosiert. Im Schritt 804 des Förderns wird die Sandmenge unter Verwendung eines Förderluftstroms zu zumindest einer Streustelle gefördert. Im Schritt 806 des Entkoppelns werden ein Ausgangsluftstrom der Dosiereinrichtung und ein Eingangsluftstrom der Fördereinrichtung unter Verwendung eines Ausgleichsluftstroms entkoppelt. Dabei ist der Ausgleichsluftstrom dazu vorgesehen, einen Unterschied zwischen dem Ausgangsluftstrom und dem Eingangsluftstrom zu kompensieren.

Das in Fig. 8 gezeigte Verfahren 800 zum Dosieren und Fördern von Sand für Sandstreuanlagen bei Schienenfahrzeugen ist gekennzeichnet durch eine rein pneumatische Dosierung und Förderung, wobei der Dosierer und der Förderer durch einen Ausgleichsluftstrom voneinander entkoppelt sind.

Die beschriebenen Ausführungsbeispiele sind nur beispielhaft gewählt und können miteinander kombiniert werden.

### Bezugszeichenliste

- 100: Sandungsvorrichtung
- 102: Schienenfahrzeug
- 104: Dosiereinrichtung, Dosierer
- 106: Fördereinrichtung, Förderer
- 108: Entkopplungseinrichtung
- 110: Dosierluftstrom
- 112: Falschluftstrom
- 114: Sandbehälter, Vorratsbehälter
- 116: Sand
- 118: erste Zweiphasenströmung Luft-Sand von Vorratsbehälter zu Dosierer
- 120: zweite Zweiphasenströmung Luft-Sand von Dosierer bis zur Ausgleichsöffnung
- 122: Ausgangsluftstrom
- 124: Förderluftstrom
- 126: Streustelle
- 128: Rad
- 130: Schiene
- 132: dritte Zweiphasenströmung Luft-Sand von Ausgleichsöffnung bis zum Förderer
- 134: Eingangsluftstrom
- 136: vierte Zweiphasenströmung Luft-Sand von Förderer durch Sandleitschlauch bis zwischen Rad und Schiene
- 138: Ausgleichsluftstrom

- 200: Gehäuse
- 202: Ejektorbohrungen
- 204: erstes Rohr, Ejektorrohr des Dosierers
- 206: Hutze des Dosierers
- 208: Falschluftstromöffnung
- 210: zweites Rohr, Ejektorrohr des Förderers
- 212: Druckausgleichskammer
- 214: Ausgleichsluftstromöffnung
- 216: Heizkörper
- 218: Heizelement
- 220: Wärmeübertragungselement
- 300: Ring
- 302: Rippe
- 304: Stirnfläche
- 306: Bodenfläche

- 400: Injektordüse des Dosierers bzw. des Förderers
- 402: Fangdüse
- 404: Diffusor des Dosierers
- 406: Zugangsbohrung, Schrägbohrung zum Ansaugen des Sandes

- 600: Ringspalt
- 602: Düse

- 700: Abnahmerohr
- 702: Düse
- 704: Diffusor

- 800: Verfahren zum Bereitstellen von Sand
- 802: Schritt des Dosierens
- 804: Schritt des Förderns
- 806: Schritt des Entkoppelns

## Patentansprüche

1. Sandungsvorrichtung (100) für ein Schienenfahrzeug (102), wobei die Sandungsvorrichtung (100) eine Dosiereinrichtung (104) zum pneumatischen Dosieren einer gewünschten Sandmenge unter Verwendung eines Dosierluftstroms und eine Fördereinrichtung (106) zum pneumatischen Fördern der Sandmenge zu zumindest einer Streustelle (126) unter Verwendung eines Förderluftstroms (124) aufweist, **gekennzeichnet durch** eine Entkopplungseinrichtung (108) zum pneumatischen Entkoppeln der Dosiereinrichtung (104) und der Fördereinrichtung (106), wobei die Entkopplungseinrichtung (108) dazu ausgebildet ist, einen Ausgleichsluftstrom (138) zum Ausgleichen eines Unterschieds zwischen einem Ausgangsluftstrom (122) der Dosiereinrichtung (104) und einem Eingangsluftstrom (134) der Fördereinrichtung (106) bereitzustellen.

2. Sandungsvorrichtung (100) gemäß Anspruch 1, bei der die Entkopplungseinrichtung (108) eine Druckausgleichskammer (212) zum Koppeln des Ausgleichsluftstroms (138) aufweist, wobei die Druckausgleichskammer (212) in einer Verbindungsleitung zwischen der Dosiereinrichtung (104) und der Fördereinrichtung (106) angeordnet ist.

3. Sandungsvorrichtung (100) gemäß einem der vorangegangenen Ansprüche, bei der die Entkopplungseinrichtung (108) einen, zu der Fördereinrichtung (106) hin schräg ausgeführten Boden zum Verhindern von Sandablagerungen in der Entkopplungseinrichtung (108) aufweist.

4. Sandungsvorrichtung (100) gemäß einem der vorangegangenen Ansprüche, bei der die Entkopplungseinrichtung (108) für den Ausgleichsluftstrom (138) zumindest eine Ausgleichsluftstromöffnung (214) zu einer Umgebung aufweist.

5. Sandungsvorrichtung (100) gemäß einem der vorangegangenen Ansprüche, bei der die Dosiereinrichtung (104) und/oder die Fördereinrichtung (106) einen Ejektor mit zumindest einer Ejektorbohrung (202) zum Bereitstellen des Dosierluftstroms (110) und/oder des Förderluftstroms (124) aufweist.

6. Sandungsvorrichtung (100) gemäß einem der vorangegangenen Ansprüche, bei der die Dosiereinrichtung (104) und/oder die Fördereinrichtung (106) einen Injektor mit zumindest einer Injektordüse (400) zum Bereitstellen des Dosierluftstroms (110) und/oder des Förderluftstroms (124) aufweist.

7. Sandungsvorrichtung (100) gemäß einem der vorangegangenen Ansprüche, bei der die Dosiereinrichtung (104) und/oder die Fördereinrichtung (106) einen Luftverstärker mit zumindest einem Ringspalt (600) zum Bereitstellen des Dosierluftstroms (110) und/oder des Förderluftstroms (124) aufweist.

8. Sandungsvorrichtung (100) gemäß einem der vorangegangenen Ansprüche, bei der die Dosiereinrichtung (104) und/oder die Fördereinrichtung (106) eine Venturidüse (702) mit zumindest einem Abnahmerohr (700) zum Zuführen der Sandmenge aufweist.

9. Sandungsvorrichtung (100) gemäß einem der vorangegangenen Ansprüche, bei der die Dosiereinrichtung (104) zumindest eine Falschluftstromöffnung (208) zu einer Umgebung aufweist, wobei die Falschluftstromöffnung (208) benachbart zu einer Einlassöffnung der Dosiereinrichtung (104) angeordnet ist und dazu ausgebildet ist, einen Falschluftstrom (112) zum Fluidisieren von Sand (116) im Bereich der Einlassöffnung bereitzustellen, wenn der Dosierluftstrom (110) durch die Dosiereinrichtung (104) strömt.

10. Sandungsvorrichtung (100) gemäß Anspruch 9, bei der die Falschluftstromöffnung (208) im Bereich der Einlassöffnung als Schrägbohrung ausgeführt ist.

11. Sandungsvorrichtung (100) gemäß einem der vorangegangenen Ansprüche, bei der die Dosiereinrichtung (104) eine Hutze (206) über einer Einlassöffnung aufweist, wobei die Hutze (206) dazu ausgebildet ist, in Abwesenheit des Dosierluftstroms (110) ein Eindringen von Sand (116) in die Dosiereinrichtung (104) zu verhindern.

12. Sandungsvorrichtung (100) gemäß einem der vorangegangenen Ansprüche, bei der die Dosiereinrichtung (104) einen Aufgabetrichter aufweist, wobei der Sandbehälter (114) durch die Dosiereinrichtung (104) restlos entleerbar ist.

13. Sandungsvorrichtung (100) gemäß einem der vorangegangenen Ansprüche, mit einem Heizkörper (216), der ein Heizelement (218) und ein Wärmeübertragungselement (220) aufweist, wobei das Heizelement (218) dazu ausgebildet ist, elektrische Energie in Wärme umzuwandeln, und das Wärmeübertragungselement (220) dazu ausgebildet ist, die Wärme von dem Heizelement (218) an ein Gehäuse (200) der Sandungsvorrichtung (100) und einen Trocknungsluftstrom zu übertragen.

14. Sandungsvorrichtung (100) gemäß Anspruch 12 und 13, bei der im Aufgabetrichter Bohrungen für den Trocknungsluftstrom als Schrägbohrungen ausgeführt sind.

15. Sandungsvorrichtung (100) gemäß einem der vorangegangenen Ansprüche, bei der das Gehäuse (200) mehrteilig ausgeführt ist, wobei in einem ersten Gehäuseteil eine um die Dosiereinrichtung (104) umlaufende Nut angeordnet ist, in der der Heizkörper (216) angeordnet ist, wobei die Nut durch einen zweiten Gehäuseteil verschlossen ist.

16. Sandungsvorrichtung (100) gemäß Anspruch 15, bei der die Nut einen polygonalen Verlauf aufweist.

17. Sandungsvorrichtung (100) gemäß einem der Ansprüche 15 bis 16, bei der die Nut eine Tiefe aufweist und der Heizkörper (216) in entspanntem Zustand eine Höhe, wobei die Höhe größer ist, als die Tiefe, und der Heizkörper (216) in eingebautem Zustand von dem zweiten Gehäuseteil gequetscht ist.

18. Sandungsvorrichtung (100) gemäß einem der Ansprüche 15 bis 17, bei der das Wärmeübertragungselement (220) eine Struktur (302) zum Bereitstellen einer Wärmeübergangsfläche zum Trocknungsluftstrom und eine Kontaktfläche zu dem Gehäuse (200) aufweist, wobei die Wärmeübergangsfläche und die Kontaktfläche in einem vorbestimmten Flächenverhältnis stehen.

19. Sandungsvorrichtung (100) gemäß einem der Ansprüche 15 bis 18, bei der das Wärmeübertragungselement (220) einen Grundkörper aus einem Elastomer aufweist, der das Heizelement (218) umschließt.

20. Sandungsvorrichtung (100) gemäß Anspruch 19, bei der das Elastomer mit zumindest einem Füllstoff ausgerüstet ist, wobei der Füllstoff dazu ausgebildet ist, eine Wärmeleitfähigkeit des Elastomers zu verändern, insbesondere zu erhöhen oder zu verringern.

21. Sandungsvorrichtung (100) gemäß einem der Ansprüche 19 bis 20, bei der das Elastomer an einer Wärmeübergangsfläche zum Trocknungsluftstrom mit einem Füllstoff ausgerüstet ist, der dazu ausgebildet ist, die Wärmeleitfähigkeit des Elastomers zu erhöhen und/oder das Elastomer an einer Kontaktfläche zu dem Gehäuse (200) mit einem Füllstoff ausgerüstet ist, der dazu ausgebildet ist, die Wärmeleitfähigkeit des Elastomers zu verringern.

22. Verfahren (800) zum Bereitstellen von Sand (116) für ein Schienenfahrzeug (102), wobei das Verfahren (800) die folgenden Schritte aufweist:
Dosieren (802) einer gewünschten Sandmenge unter Verwendung eines Dosierluftstroms (110);
Fördern (804) der Sandmenge zu zumindest einer Streustelle (126) unter Verwendung eines Förderluftstroms (124); und
Entkoppeln (806) eines Ausgangsluftstroms (122) der Dosiereinrichtung (104) und eines Eingangsluftstroms (134) der Fördereinrichtung (106) unter Verwendung eines Ausgleichsluftstroms (138) zum Ausgleichen eines Unterschieds zwischen dem Ausgangsluftstrom (122) und dem Eingangsluftstrom (134).

## Claims

1. Sand dispenser (100) for a rail vehicle (102), the sand dispenser (100) comprising a metering device (104) for pneumatically metering a desired sand quantity using a metering air flow (110) and a conveying device (106) for pneumatically conveying the sand quantity to at least one scattering location (126) using a conveying air flow (124), **characterised by** a decoupling device (108) for pneumatically decoupling the metering device (104) and the conveying device (106), wherein the decoupling device (108) is designed to provide a compensation air flow (138) for compensating for a difference between an outlet air flow (122) of the metering device (104) and an inlet air flow (134) of the conveying device (106).

2. Sand dispenser (100) according to claim 1, wherein the decoupling device (108) has a pressure compensation chamber (212) for coupling the compensation air flow (138), wherein the pressure compensation chamber (212) is located in a connection line between the metering device (104) and the conveying device (106).

3. Sand dispenser (100) according to any of the preceding claims, wherein the decoupling device (108) has a base which is constructed obliquely toward the conveying device (106) in order to prevent sand deposits in the decoupling device (108).

4. Sand dispenser (100) according to any of the preceding claims, wherein the decoupling device (108) has at least one compensation air flow opening (214) with respect to an environment for the compensation air flow (138).

5. Sand dispenser (100) according to any of the preceding claims, wherein the metering device (104) and/or the conveying device (106) has/have an ejector having at least one ejector hole (202) for providing the metering air flow (110) and/or the conveying air flow (124).

6. Sand dispenser (100) according to any of the preceding claims, wherein the metering device (104) and/or the conveying device (106) has/have an ejector having at least one injector nozzle (400) for providing the metering air flow (110) and/or the conveying air flow (124).

7. Sand dispenser (100) according to any of the preceding claims, wherein the metering device (104) and/or the conveying device (106) has/have an air amplifier having at least one annular gap (600) for providing the metering air flow (110) and/or the conveying air flow (124).

8. Sand dispenser (100) according to any of the preceding claims, wherein the metering device (104) and/or the conveying device (106) has/have a Venturi nozzle (702) having at least one discharge pipe (700) for supplying the sand quantity.

9. Sand dispenser (100) according to any of the preceding claims, wherein the metering device (104) has at least one entrained air flow opening (208) to an environment, wherein the entrained air flow opening (208) is located adjacent to an inlet opening of the metering device (104) and is designed to provide an entrained air flow (112) for fluidising sand (116) in the region of the inlet opening when the metering air flow (110) flows through the metering device (104).

10. Sand dispenser (100) according to claim 9, wherein the entrained air flow opening (208) is constructed in the region of the inlet opening as an oblique hole.

11. Sand dispenser (100) according to any of the preceding claims, wherein the metering device (104) has an intake (206) above an inlet opening, wherein the intake (206) is designed to prevent the introduction of sand (116) into the metering device (104) in the absence of the metering air flow (110).

12. Sand dispenser (100) according to any of the preceding claims, wherein the metering device (104) has a dispensing funnel, wherein the sand container (114) can be emptied without any residue by the metering device (104).

13. Sand dispenser (100) according to any of the preceding claims, with heater (216) which has a heating element (218) and a heat transmission element (220), wherein the heating element (218) is designed to convert electrical energy into heat and the heat transmission element (220) is designed to transmit the heat from the heating element (218) to a housing (200) of the sand dispenser (100) and a drying air flow.

14. Sand dispenser (100) according to claims 12 and 13, wherein holes for the drying air flow are designed as oblique holes in the dispensing funnel.

15. Sand dispenser (100) according to any of the preceding claims, wherein the housing (200) is constructed in multiple parts, wherein there is arranged in a first housing part a groove which extends round the metering device (104) and in which the heater (216) is located, wherein the groove is closed by a second housing part.

16. Sand dispenser (100) according to claim 15, wherein the groove has a polygonal extent.

17. Sand dispenser (100) according to claim 15 or 16, wherein the groove has a depth and the heater (216) has a height in the relaxed state, wherein the height is greater than the depth and the heater (216) is compressed by the second housing part in the installed state.

18. Sand dispenser (100) according to any of claims 15 to 17, wherein the heat transmission element (220) has a structure (302) for providing a heat transmission face with respect to the drying air flow and a contact face with respect to the housing (200), wherein the heat transmission face and the contact face are in a predetermined surface-area ratio.

19. Sand dispenser (100) according to any of claims 15 to 18, wherein the heat transmission element (220) has a base member which comprises an elastomer material and which surrounds the heating element (218).

20. Sand dispenser (100) according to claim 19, wherein the elastomer material is provided with at least one filler material, wherein the filler material is designed to change a thermal conductivity of the elastomer material, in particular to increase or decrease it.

21. Sand dispenser (100) according to claim 19 or 20, wherein the elastomer material is provided at a heat transmission face with respect to the drying air flow with a filler material which is designed to increase the thermal conductivity of the elastomer material and/or the elastomer material is provided at a contact face with respect to the housing (200) with a filler material which is designed to reduce the thermal conductivity of the elastomer material.

22. Method (800) for providing sand (116) for a rail vehicle (102), wherein the method (800) comprises the following steps:
metering (802) a desired sand quantity using a metering air flow (110);
conveying (804) the sand quantity to at least one scattering location (126) using a conveying air flow (124); and
decoupling (806) an outlet air flow (122) of the metering device (104) and an inlet air flow (134) of the conveying device (106) using a compensation air flow (138) for compensating for a difference between the outlet air flow (122) and the inlet air flow (134).

## Revendications

1. Installation (100) de sablage pour un véhicule (102) ferroviaire, l'installation (100) de sablage ayant
un dispositif (104) de dosage pour le dosage pneumatique d'une quantité de sable souhaitée, en utilisant un courant d'air dosé et
un dispositif (106) de transport pour le transport pneumatique de la quantité de sable à au moins un point (126) d'épandage, en utilisant un courant (124) d'air de transport
**caractérisée par**
un dispositif (108) de découplage pour le découplage pneumatique du dispositif (104) de dosage et du dispositif (106) de transport, le dispositif (108) de découplage étant constitué pour mettre à disposition un courant (138) d'air de compensation pour la compensation d'une différence entre un courant (122) d'air de sortie du dispositif (104) de dosage et un courant (134) d'air d'entrée du dispositif (106) de transport.

2. Installation (100) de sablage suivant la revendication 1, dans laquelle le dispositif (108) de découplage a une chambre (212) de compensation de la pression pour le couplage du courant (138) d'air de compensation, la chambre (212) de compensation de la pression étant disposée dans une ligne de liaison entre le dispositif (104) de dosage et le dispositif (106) de transport.

3. Installation (100) de sablage suivant l'une des revendications précédentes, dans laquelle le dispositif (108) de découplage a un fond réalisé de manière inclinée vers le dispositif (106) de transport pour empêcher des dépôts de sable dans le dispositif (108) de découplage.

4. Installation (100) de sablage suivant l'une des revendications précédentes, dans laquelle le dispositif (108) de découplage a, pour le courant (138) d'air de compensation, au moins une ouverture (214) de courant d'air de compensation vers une atmosphère ambiante.

5. Installation (100) de sablage suivant l'une des revendications précédentes, dans laquelle le dispositif (104) de dosage et/ou le dispositif (106) de transport a un éjecteur ayant au moins un trou (202) d'éjecteur pour la mise en disposition du courant (110) d'air de dosage et/ou du courant (124) d'air de transport.

6. Installation (100) de sablage suivant l'une des revendications précédentes, dans laquelle le dispositif (104) de dosage et/ou le dispositif (106) de transport a un injecteur ayant au moins une buse (400) pour la mise à disposition du courant (110) d'air de dosage et/ou du courant (124) d'air de transport.

7. Installation (100) de sablage suivant l'une des revendications précédentes, dans laquelle le dispositif (104) de dosage et/ou le dispositif (106) de transport a un amplificateur d'air ayant au moins un intervalle (600) annulaire pour la mise à disposition du courant (110) d'air de dosage et/ou du courant (124) d'air de transport.

8. Installation (100) de sablage suivant l'une des revendications précédentes, dans laquelle le dispositif (104) de dosage et/ou le dispositif (106) de transport a une buse (702) de venturi ayant au moins un tube (700) de prélèvement pour l'apport de la quantité de sable.

9. Installation (100) de sablage suivant l'une des revendications précédentes, dans laquelle le dispositif (104) de dosage a au moins une ouverture (208) de courant d'air parasite vers une atmosphère ambiante, l'ouverture (208) de courant d'air parasite étant disposée au voisinage d'une ouverture d'entrée du dispositif (104) de dosage et étant constituée pour mettre à disposition un courant (112) d'air parasite pour fluidiser du sable (116) dans la région de l'ouverture d'entrée, lorsque le courant (110) d'air de dosage passe dans le dispositif (104) de dosage.

10. Installation (100) de sablage suivant la revendication 9, dans laquelle l'ouverture (208) de courant d'air parasite est réalisée sous la forme d'un trou incliné dans la région de l'ouverture d'entrée.

11. Installation (100) de sablage suivant l'une des revendications précédentes, dans laquelle le dispositif (104) de dosage a une coiffe (206) au-dessus d'une ouverture d'entrée, la coiffe (206) étant constituée pour empêcher, en l'absence du courant (110) d'air de dosage, du sable (116) de pénétrer dans le dispositif (104) de dosage.

12. Installation (100) de sablage suivant l'une des revendications précédentes, dans laquelle le dispositif (104) de dosage a une trémie d'alimentation, le récipient (114) de sable pouvant être vidée sans résidu par le dispositif (104) de dosage.

13. Installation (100) de sablage suivant l'une des revendications précédentes, comprenant un corps (216) de chauffage, qui a un élément (218) de chauffage et un élément (220) de transmission de la chaleur, l'élément (218) de chauffage étant constitué pour transformer de l'énergie électrique en chaleur et l'élément (220) de transmission de la chaleur étant constitué pour transmettre la chaleur de l'élément (218) de chauffage à une enveloppe (200) de l'installation (100) de sablage et à un courant d'air de séchage.

14. Installation (100) de sablage suivant la revendication 12 et 13, dans laquelle, dans la trémie d'alimentation, des trous sont réalisés sous la forme de trous inclinés pour le courant d'air de séchage.

15. Installation (100) de sablage suivant l'une des revendications précédentes, dans laquelle l'enveloppe (200) est réalisée en plusieurs parties, dans laquelle dans une première partie de l'enveloppe est disposée une rainure, qui fait le tour du dispositif (104) de dosage et dans laquelle est disposé le corps (216) de chauffage, la rainure étant fermée par une deuxième partie de l'enveloppe.

16. Installation (100) de sablage suivant la revendication 15, dans laquelle la rainure a un tracé polygonal.

17. Installation (100) de sablage suivant l'une des revendications 15 à 16, dans laquelle la rainure a une profondeur et le corps (216) de chauffage, à l'état détendu, a une hauteur, la hauteur étant plus grande que la profondeur et le corps (216) de chauffage est, à l'état monté, pincé par la deuxième partie de l'enveloppe.

18. Installation (100) de sablage suivant l'une des revendications 15 à 17, dans laquelle l'élément (220) de transmission de la chaleur a une structure (302) pour la mise à disposition d'une surface de transmission de la chaleur au courant d'air de séchage et a une surface de contact avec l'enveloppe (200), la surface de transmission de la chaleur et la surface de contact étant en une relation de surface déterminée à l'avance.

19. Installation (100) de sablage suivant l'une des revendications 15 à 18, dans laquelle l'élément (200) de transmission de la chaleur a un corps de base en un élastomère, qui entoure l'élément (218) de chauffage.

20. Installation (100) de sablage suivant la revendication 19, dans laquelle l'élastomère est pourvu d'au moins une charge, la charge étant constituée pour modifier, notamment pour augmenter ou diminuer, une conductivité thermique de l'élastomère.

21. Installation (100) de sablage suivant l'une des revendications 15 à 20, dans laquelle l'élastomère est pourvu, sur une surface de transmission de la chaleur vers le courant d'air de séchage, d'une charge constituée pour augmenter la conductivité thermique de l'élastomère et/ou l'élastomère est pourvu, sur une surface de contact avec l'enveloppe (200), d'une charge constituée pour diminuer la conductivité thermique de l'élastomère.

22. Procédé (800) de mise à disposition de sable (116) pour un véhicule (102) ferroviaire, le procédé (800) ayant les stades suivants :
dosage (802) d'une quantité de sable souhaitée, en utilisant un courant (110) d'air de dosage ;
transport (804) de la quantité de sable à au moins un point (126) d'épandage, en utilisant un courant (124) d'air de transport et
découplage (806) d'un courant (122) d'air de sortie du dispositif (104) de dosage et d'un courant (134) d'air d'entrée du dispositif (106) de transport, en utilisant un courant (128) d'air de compensation pour compenser une différence entre le courant (122) d'air de sortie et le courant (134) d'air d'entrée.
